Europäisches Patentamt

European Patent Office

Office européen des brevets

Veröffentlichungsnummer: **0 367 753**
**A1**

## EUROPÄISCHE PATENTANMELDUNG

Anmeldenummer: 89890274.7

Int. Cl.5 **A23L 1/328**

Anmeldetag: **20.10.89**

Priorität: **20.10.88 AT 2604/88**

Veröffentlichungstag der Anmeldung:
**09.05.90 Patentblatt 90/19**

Benannte Vertragsstaaten:
**CH DE FR IT LI**

Anmelder: **Seiler, Thomas**
**Albertgasse 19**
**A-1080 Wien(AT)**

Erfinder: **Seiler, Thomas**
**Albertgasse 19**
**A-1080 Wien(AT)**

Vertreter: **Haffner, Thomas M., Dr. et al**
**Patentanwaltskanzlei Dipl.-Ing. Adolf**
**Kretschmer Dr. Thomas M. Haffner**
**Schottengasse 3a**
**A-1014 Wien(AT)**

Streichfähige Nahrungs- bzw. Genussmittelzubereitung sowie Verfahren zur Herstellung derselben.

Streichfähige Nahrungs- bzw. Genußmittelzubereitung, welche Preßkaviar und pflanzliche oder tierische zum Verzehr geeignete Fette zusammen mit einer Trägermatrix aus stärkehaltigen Substanzen in pürierter Form und Milchprodukten, wie z.B. Crème fraiche, Joghurt, Sahne, Sauerrahm od.dgl. als homogene Mischung enthält.

EP 0 367 753 A1

## Streichfähige Nahrungs- bzw. Genußmittelzubereitung sowie Verfahren zur Herstellung derselben

Die Erfindung bezieht auf eine streichfähige Nahrungs- bzw. Genußmittelzubereitung, sowie ein Verfahrn zur Herstellung derselben.

Es sind eine Reihe von streichfähigen Zubereitungen der eingangs genannten Art bekanntgeworden, welche durchwegs Substanzen enthalten, welche in der Regel auch ohne eine besondere Zubereitung zum Verzehr geeignet sind. Eine Reihe von Nebenprodukten der Nahrungsmittelindustrie werden beispielsweise nach Hydrolyse oder aufwendiger Zerkleinerung gleichfalls zu streichfähigen Zubereitungen verarbeitet, deren geschmackliche Qualität jedoch zumeist zu wünschen übrigläßt.

Hochwertige streichfähige Zubereitungen in Form von Pasteten od.dgl. werden zumeist auf der Basis von tierischer Leber hergestellt.

Aus der DE-PS 706 516 ist bereits ein Verfahren zur Herstellung eines Brotaufstriches aus Fischmilch und Fischrogen bekanntgeworden, bei welchem die Fischmilch oder auch der Fischrogen vor dem Mischen mit Dorschleber in Öl oder Milch gekocht wurde. Aus der CH-PS 657 253 ist ein weiteres Produkt auf der Basis von Fischeiern bekanntgeworden, welches als Hauptbestandteile Fischeier, natürliche Öle, Zwiebel, trockenes Brot und Zitronensaft enthält.

Bei der Herstellung von Kaviar, d.h. Störrogen von Beluga, Sevruga oder Acetra, fällt beim Abfüllen ein hochwertiges Nebenprodukt an, das in der Regel nur zu Preßkaviar verarbeitet werden kann und die für Kaviar typische Konsistenz daher verliert. Derartiger Preßkaviar eignet sich in der bei der Produktion anfallenden Form nicht ohne weiteres zum Verzehr, und es ist bisher für dieses hochwertige Nebenprodukt keine Zubereitung bekanntgeworden, welche unter Nutzung der hochwertigen Eigenschaften des Ausgangsproduktes eine zum Verzehr geeignete Zubereitung ergibt.

Die Erfindung zielt nun darauf ab, dieses hochwertige Nebenprodukt der Kaviarverarbeitung, nämlich Preßkaviar, in eine zum Verzehr geeignete Form zu bringen, welche sich neben besonderen geschmacklichen, auf den Geschmack von echtem Kaviar zurückgehenden Eigenschaften auch durch eine Konsistenz auszeichnet, welche die streichfähige Zubereitung als hochwertiges Nahrungs- bzw. Genußmittel ausweisen. Zur Lösung dieser Aufgabe besteht die erfindungsgemäße Zubereitung im wesentlichen darin, daß sie 15 bis 50 Gew.-% Preßkaviar und 15 bis 30 Gew.-% pflanzliche und tierische zum Verzehr geeignete Fette sowie 15 bis 25 Gew.-% stärkehaltige Substanzen in pürierter Form, insbesondere Kartoffelpüree und/oder pürierten Reis als weitgehend homogene Mischung enthält. Durch die Zufügung von pflanzlichen oder tierischen zum Verzehr geeigneten Fetten läßt sich der bei Raumtemperatur üblicherweise relativ feste Preßkuchen von Preßkaviar in eine zum Verzehr geeignete streichfähige Form überführen, welche sich geschmacklich dadurch auszeichnet, daß sie im wesentlichen alle geschmacklichen Eigenschaften des Kaviars behält. Preßkaviar ist auf Grund seiner Herstellungsweise als Konzentrat anzusprechen, da Flüssigkeit abgepreßt wurde, und dieses Konzentrat zeichnet sich durch einen intensiveren Eigengeschmack als Kaviar aus. Durch die weitgehend homogene Mischung mit tierischen oder pflanzlichen, zum Verzehr geeigneten Fetten wird dieser intensive Geschmack in einem Ausmaß zurückgedrängt, wodurch die Gesamtmischung die geschmacklichen Eigenschaften von Kaviar erhält. Um nun eine derartige streichfähige Zubereitung in eine Form zu bringen, welche auch von der Konsistenz her noch besser den Eigenschaften von Kaviar entspricht, und um vor allen Dingen ein Übermaß an Fett in einer derartigen Zubereitung zu verhindern, enthält die Mischung als Trägermatrix stärkehaltige Substanzen in pürierter Form, insbesondere Kartoffelpüree und/oder pürierten Reis. Wesentlich für die Wahl einer derartigen Trägermatrix ist der Umstand, daß die Trägermatrix möglichst wenig Eigengeschmack aufweisen soll und andererseits eine Konsistenz erreichen soll, welche sich dem samtigen bzw. cremigen Charakter von guten Pasteten nähert. Eine weitere Verfeinerung des Geschmackes unter gleichzeitiger Minderung eines unverwünscht hohen Fettgehaltes kann dadurch erreicht werden, daß die Mischung zusätzlich dickflüssige bzw. halbfeste Milchprodukte, wie z.B. Crème fraiche, Joghurt, Sahne, Sauerrahm, Topfen, Hüttenkäse oder Kefir enthält. Durch geeignete Wahl der Mengenverhältnisse kann hiebei aus einem Material, welches bei Raumtemperatur üblicherweise fest vorliegt, eine streichfähige Zubereitung erzielt werden, welche sich über einen großen Temperaturbereich, insbesondere den Bereich von etwa -4°C und +30°C, streichfähig bleibt und aus diesem Grunde unmittelbar zum Verzehr geeignet ist.

Eine besonders vorteilhafte Mischung wird hiebei dann erzielt, wenn die Ausbildung so getroffen ist, daß die Mischung 15 bis 50 Gew.-%, insbesondere 20 bis 35 Gew.-%, Preßkaviar, 15 bis 30 Gew.-% Margarine und/oder Butter, 15 bis 25 Gew.-% Crème fraiche und 15 bis 25 Gew.-% Kartoffelpüree und/oder pürierten Reis enthält, wobei sich eine derartige Mischung durch besonders guten Geschmack auszeichnet.

Die erfindungsgemäße streichfähige Nahrungs- bzw. Genußmittelzubereitung kann in an sich bekannter Weise mit Lebensmittelfarben, insbesondere Tintenfischtinte, versetzt sein, und es können geschmackshebende Substanzen, wie Natriumglutamat und gegebenenfalls Konservierungsmittel, zugesetzt sein.

Das erfindungsgemäße Verfahren zur Herstellung einer derartigen streichfähigen Nahrungsbzw. Genußmittelzubereitung besteht im wesentlichen darin, daß in einem Arbeitsgang Preßkaviar mit eßbaren Fetten bei Temperaturen zwischen 35° und 85°, insbesondere 40 bis 50° C, zu einer weitgehend homogenen Mischung verrührt wird, daß in einem gesonderten Arbeitsgang Kartoffelpüree und/oder pürierter Reis mit den Milchprodukten, insbesondere Crème fraiche, verrührt wird und daß die beiden gebildeten Gemische zur Erzielung der gewünschten Konzentration an Preßkaviar im streichfähigen Endprodukt miteinander, gegebenenfalls unter Zusatz von Farbstoffen, gemschmackshebenden Substanzen und Konservierungsmitteln vermischt und gekühlt werden. Dadurch, daß Preßkaviar in einem Arbeitsgang mit eßbaren Fetten vermischt wird, kann eine intensive und homogene Durchmischung erzielt werden, ohne daß dies die Qualität der anderen Zutaten der Zubereitung beeinträchtigt. Dieses Gemisch kann darüberhinaus bei relativ hohen Temperaturen verrührt werden, so daß eine Pasteurisierung ohne weiteres möglich ist. Das auf diese Weise hergestellte, weitgehend homogene Gemisch kann in der Folge mit einem weiteren Gemisch, bestehend aus der Trägermatrix aus Kartoffelpüree und/oder püriertem Reis und den Milchprodukten, insbesondere Crème fraiche, verrührt werden, wobei die Maßnahme, die Trägermatrix mit den Milchprodukten in einem gesonderten Arbeitsgang zu verrühren, den Vorteil bietet, daß die Milchprodukte ihre Konsistenz behalten und nicht steifer werden. In diesem gesonderten Mischungsvorgang kann das Vermischen bei Raumtemperatur vorgenommen werden, wobei selbstverständlich auch hier gegebenenfalls höhere Temperaturen angewandt werden können. Insgesamt erfordert der Arbeitsgang des Vermischens von Preßkaviar mit eßbaren Fetten in der Regel eine längere Zeit als das Vermischen der Trägermatrix mit den Milchprodukten, so daß durch die Trennung dieser beiden Arbeitsschritte ein den jeweiligen Produkteigenschaften Rechnung tragender Mischungseffekt erzielt werden kann. Ein auf diese Weise gegebenenfalls unter Zusatz von Farbstoffen, geschmackshebenden Substanzen und Konservierungsmitteln durch Vermischen hergestelltes Endprodukt, nämlich eine streichfähige Zubereitung, kann in der Folge in besonders einfacher Weise verpackt, insbesondere vakummverpackt, und tiefgekühlt werden.

Insgesamt wird durch die erfindungsgemäße Verfahrensweise ein als hochwertiges Nahrungs-bzw. Genußmittel unbrauchbarer Ausgangsstoff, nämlich Preßkaviar, in eine hochwertige, streichfähige Zubereitung umgewandelt, welche geschmacklich besonders ansprechend und gewerblich verwendbar wird.

Die Erfindung wird nachfolgend an Hand eines Ausführungsbeispieles näher erläutert.

Für die Erzielung einer besonders gut streichfähigen Zubereitung werden in einem ersten Arbeitsgang 600 g Preßkaviar in einer Rührschüssel durch 10-minütiges Rühren bei mäßiger Geschwindigkeit mit 500 g Margarine bei einer Temperatur von etwa 45° C vermischt. In einem zweiten, gesonderten Arbeitsgang werden 450 g vorbereitetes kaltes Kartoffelpüree mit 400 g Crème fraiche unter vorsichtigem Rühren vermischt. Bei diesem Arbeitsgang muß darauf geachtet werden, daß beim Vermischen der Crème fraiche mit dem Kartoffelpüree nicht zu heftig gerührt wird, damit die Crème fraiche ihre cremige Konsistenz beibehält.

In einem dritten Arbeitsgang werden nun die auf etwa 45° C gehaltene Mischung aus Preßkaviar und Margarine und die Mischung aus Crème fraiche und Kartoffelpüree unter vorsichtigem Rühren zu einer homogenen Masse vermischt. Die fertige Mischung wird auf Lagertemperatur abgekühlt und vakuumverpackt.

Um einen Farbton, welcher dem des echten Kaviars entspricht zu erhalten, können vor der Zugabe des Gemisches aus Crème fraiche und Kartoffelpüree in die Mischung aus Preßkaviar und Margarine je nach Bedarf ein bis einige Tropfen Tintenfischtinte zugesetzt werden. Durch diese Farbstoffzugabe können sämtliche gewünschten farblichen Abstufungen der streichfähigen Nahrungs- bzw. Genußmittelzubereitung erhalten werden. Das erzielte Produkt zeichnet sich durch einen besonders feinen Geschmack, welcher dem des echten Kaviars entspricht, aus und weist andererseits eine Konsistenz auf, welche derjenigen von guten Pasteten entspricht.

Als besonders vorteilhaft bei der erfindungsgemäßen Zubereitung ist die Tatsache zu werten, daß das Produkt ohne nachteilige Änderungen im Geschmack der Struktur und des Aussehens tiefgefroren werden kann und auf diese Weise länger lagerfähig ist. Hiebei ist es unerheblich, ob beim Einfrieren bestimmte Abkühlzeiten eingehalten werden und es haben sich selbst bei konventionellem Einfrieren durch Tiefkühlen auf -30° C bei nachfolgendem Auftauen keine nachteiligen Änderungen feststellen lassen. Naturgemäß ist ein Schockgefrieren als schonender zu erachten, im Zusammenhang mit der erfindungsgemäßen Zubereitung aber nicht erforderlich.

**Ansprüche**

1. Streichfähige Nahrungs- bzw. Genußmittelzubereitung, dadurch gekennzeichnet, daß sie 15 bis 50 Gew.-% Preßkaviar und 15 bis 30 Gew.-% pflanzliche und tierische zum Verzehr geeignete Fette sowie 15 bis 25 Gew.-% stärkehaltige Substanzen in pürierter Form, insbesondere Kartoffelpüree und/oder püriertem Reis, als weitgehend homogene Mischung enthält.

2. Nahrungs- bzw. Genußmittelzubereitung nach Anspruch 1, dadurch gekennzeichnet, daß die Mischung zusätzlich dickflüssige bzw. halbfeste Milchprodukte, wie z.B. Crème fraiche, Joghurt, Sahne, Sauerrahm, Topfen, Hüttenkäse oder Kefir enthält.

3. Nahrungs- bzw. Genußmittelzubereitung nach Anspruch 1 oder 2, dadurch gekennzeichnet, daß die Mischung 15 bis 50 Gew.-%, insbesondere 20 bis 35 Gew.-% Preßkaviar, 15 bis 30 Gew.-% Margarine und/oder Butter, 15 bis 25 Gew.-% Crème fraiche und 15 bis 25 Gew.-% Kartoffelpüree und/oder pürtierten Reis enthält.

4. Nahrungs- bzw. Genußmittelzubereitung nach Anspruch 1, 2 oder 3, dadurch gekennzeichnet, daß die Mischung Lebensmittelfarben, wie z.B. Tintenfischtinte, geschmackshebende Substanzen, insbesondere Natriumglutamat und gegebenenfalls Konservierungsmittel enthält.

5. Verfahren zur Herstellung einer streichfähigen Nahrungs-bzw. Genußmittelzubereitung nach einem der Ansprüche 1 bis 4, dadurch gekennzeichnet, daß in einem Arbeitsgang Preßkaviar mit eßbaren Fetten bei Temperaturen zwischen 35° und 85°C, insbesondere 40 bis 50°C, zu einer weitgehend homogenen Mischung verrührt wird, daß in einem gesonderten Arbeitsgang Kartoffelpüree und/oder pürierter Reis mit den Milch produkten, insbesondere Crème fraiche, verrührt wird und daß die beiden gebildeten Gemische zur Erzielung der gewünschten Konzentration an Preßkaviar im streichfähigen Endprodukt miteinander gegebenenfalls unter Zusatz von Farbstoffen, geschmackshebenden Substanzen und Konservierungsmitteln, vermischt und gekühlt werden.

6. Verfahren zur Herstellung einer Nahrungs- bzw. Genußmittelzubereitung nach einem der Ansprüche 1 bis 4, dadurch gekennzeichnet, daß das streichfähige Endprodukt verpackt, insbesondere vakuumverpackt, und tiefgekühlt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 103 455 (CAVIAR-CHRISTENSEN)<br>* Ansprüche 1-6 *<br>--- | 1 | A 23 L 1/328 |
| D,A | CH-A- 657 253 (S. PETROV)<br>* Ansprüche 1-6 *<br>--- | 1 | |
| D,A | DE-C- 706 516 (G.L. FRIEDRICHS)<br>* Anspruch *<br>----- | 1 | |

RECHERCHIERTE SACHGEBIETE (Int. Cl.5)

A 23 L 1/00

Der vorliegende Recherchenbericht wurde für alle Patentansprüche erstellt

| Recherchenort | Abschlußdatum der Recherche | Prüfer |
|---|---|---|
| BERLIN | 11-01-1990 | SCHULTZE D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P0403)